# EUROPEAN PATENT APPLICATION

(11) **EP 2 700 864 A2**
(43) Date of publication of application: **26.02.2014**
(21) Application number: 13180780.2
(22) Date of filing: 16.08.2013
(51) Int. Cl.: F16L 57/02, F16L 1/12

(54) **Protective member for a utility line**

(30) Priority: 20.08.2012 GB 201214781
(71) Applicant: Pipeline Engineering & Supply Company Limited, Catterick Bridge Richmond DL10 7JG (GB)
(72) Inventor: Swinbourne, Samuel Martin John, Defford, Worcester WR8 9BE (GB)
(74) Representative: Hendry, Niall James

(57) **Abstract**

A protective member for a utility line is provided. The member comprises at least two body portions (1) and each body portion (1) contains a channel (3). The body portions (1) are bonded to one another such that the channels (3) form a passage in which the utility line is located. A method of assembling the protective member is also provided.

## Description

### Field of the Invention:

The present invention relates to centralisers, bend restrictors and other protective members for the protection of flexible utility lines and the like.

### Background to the Invention:

Bend restrictors are used to prevent excessive bending of utility lines such as flexible flowlines, umbilicals and cables, during installation and service. Bend restrictors are fabricated as a series of interconnected sections, commonly known as vertebrae. When joined together in series, each vertebra is prevented from moving more than a small angular distance relative to the next vertebra in the chain. When expanded over the entire bend restrictor length, the small angular movements that each vertebra may undergo combine to define the locking radius of the bend restrictor.

A utility line is housed within a longitudinal bore through the bend restrictor. The bend restrictor is configured such that its locking radius is greater than or equal to the minimum bend radius of the utility line housed within the bend restrictor. In this way the series of vertebrae which form the bend restrictor "lock-out" to prevent bending of the utility line below its minimum bend radius, and the bend restrictor prevents kinking, buckling or damage of the utility line housed within it.

In pipeline technology, and especially pipeline used in the extraction and transportation of crude oil, several different tools are used which are called "centralisers". Whilst they undertake different functions in oil drilling, they all have in common that their function is to maintain something as central as possible within a borehole, completed pipeline or other tube-like structure. Increasingly, such centralisers are also finding application in wind farms, i.e. collections of wind turbines used to generate power, and are especially useful in offshore windfarms. Utility lines are frequently deployed within protective tubes such as "J-Tubes" or "I-Tubes" in the subsea environment prior to being connected with a surface platform or the like. In this case "utility lines" is used to refer to combinations of hydraulic hoses, electrical cables and/or optical fibres used to control subsea structures or drilling tools from the surface. During such deployment, it is important that the utility lines are centralised within the tube, as excessive contact with the inside bore of the tube may lead to them being damaged.

A disadvantage associated with existing protective members such as the aforementioned bend restrictors and centralisers is that each is usually formed from a pair of hemi-cylindrical body members which are placed on opposite sides of the utility line and then brought together about the utility line and secured together with bolts or similar mechanical fixtures in order to form a generally cylindrical protective member about the utility line. Securing the pairs of body members in this way requires the provision of apertures through corresponding portions of each body member so that the mechanical fixtures can pass though the body members and secure each pair together. However, these apertures can weaken the protective members as they may act as stress locators when the protective member is in operational service. This may lead to failure of the protective member if a sufficiently high load is placed on the body members.

Furthermore, having to purchase numerous mechanical fixtures in order to secure the body members to one another is expensive. There is also the risk of damaging the body members if the mechanical fixtures have an excessive torque applied when securing the members together. Finally, if the fixing apertures in each pair of body members are not correctly aligned the manufacturing tolerances of the apertures will allow the two body members to move a little relative to one another when in use, thereby increasing the wear rate of the protective member.

It is an aim of the present invention to obviate or mitigate this disadvantage with existing protective members.

### Summary of the Invention:

According to a first aspect of the invention, there is provided a protective member for a utility line, the member comprising at least two body portions, each body portion containing a channel, and wherein the body portions are bonded to one another such that the channels form a passage in which the utility line is located.

The protective member may have a first end having a longitudinally projecting portion and a second end having a recess adapted to receive the projecting portion of an adjacent protective member.

The first end may include a flange projecting radially outwardly therefrom, and the recess may be an inwardly facing circumferential groove adapted to receive such a flange.

The protective member may comprise two body portions which are hemi-cylindrical.

The body portions may be formed from polyurethane. The body portions may be bonded to one another by a hydrolysis-resistant polyurethane adhesive.

Each body portion may include positioning means for correctly positioning the body portions relative to one another. The positioning means may comprise a tongue projecting from a mating surface of a first body portion, and a groove placed in the corresponding mating surface of a second body portion for receiving the tongue.

Alternatively, the positioning means may comprise a positioning member projecting from a mating surface of the first body portion, and a positioning recess placed in the corresponding mating surface of the second body portion for receiving the positioning member. The positioning member may include a distal end having a first width or diameter which is less than or equal to that of the positioning recess, and a proximal end having a second width or diameter which is greater than that of the positioning recess. Consequently, the proximal end of the positioning member cannot enter the recess and ensures that a small gap is provided between first and second body portions when they are brought together so that adhesive is not squeezed out from between the two body portions.

The protective member may be a centraliser which in use is located within an outer tubular member.

According to a second aspect of the invention, there is provided a bend restrictor adapted to house a utility line, the bend restrictor comprising at least first and second protective members according to the first aspect of the invention, the protective members being connected to one another in series so that each the first protective member may pivot through a limited range of motion relative to the second protective member.

The bend restrictor may comprise at least one resilient damping member located between the protective members.

The first end of the second protective member is located in the recess of the first protective member, wherein the damping member may be located in the recess of the first protective member.

Each protective member may have an outer surface which includes a damping surface, and the damping member is located between the damping surface of the second body member and the second end of the first body member.

The damping member may be annular.

The damping member may be hemi-annular.

The bend restrictor may further comprise a plurality of longitudinally arranged protective members, and a damping member located between each protective member.

According to a third aspect of the invention, there is provided a method of assembling a protective member for a utility line, the method comprising the steps of:
forming at least two body portions, with each body portion containing a channel;
applying an adhesive to at least one of the body portions; and
pressing the body portions together such that the body portions bond together and a passage is defined by the channels.

The body portions may be bonded together around the utility line. Alternatively, the utility line may be fed into the passage once the body portions have been bonded.

### Brief Description of the Drawings:

A preferred embodiment of the present invention will now be described by way of example only, with reference to the accompanying drawings, in which:
Figures 1(a), 1(b) and 1(c) are side, top and end views respectively of a body member which forms half of a protective vertebra for a utility line;
Figure 2 is a perspective view of two interconnected body members which each form half of a protective vertebra for a utility line;
Figure 3 is a perspective view of a first alternative body member which forms half of a protective vertebra for a utility line;
Figure 4 is a perspective view of a second alternative body member which forms half of a protective vertebra for a utility line; and
Figure 5 is a detail view of the join between a pair of the second alternative body members when forming a protective vertebra.

### Detailed Description of the Drawings:

A protective member according to the present invention will now be described in detail, with the example shown being a bend restrictor. A bend restrictor is a device that is operable to prevent a utility line such as a flowline, umbilical and/or cable, from bending below its minimum bend radius. A minimum bend radius is the minimum radius one can bend a utility line without kinking it, damaging it, or shortening its life span.

The protective members, or vertebrae, described herein are formed from two body members which are attached together to form a single vertebra. For illustrative purposes only one half of each complete vertebra is shown in the accompanying figures.

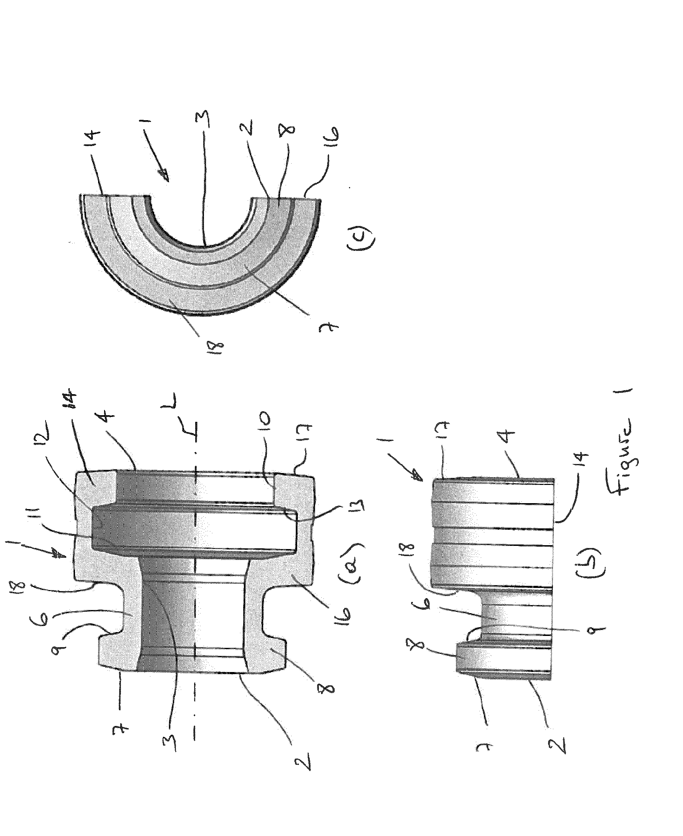

Figures 1(a)-(c) show various views of a body member 1 which forms one half on a vertebra of a bend restrictor. The body member 1 has a longitudinal axis L, a male projecting portion 2 at a first end thereof and a female portion 4 at a second, opposite end thereof. A channel 3 extends longitudinally through the body member 1 and, with the channel of the other body member forming the vertebra, defines a passage in which the utility line will be housed. The male portion 2 comprises an elongate neck portion 6, which has a hemi-annular flange 8 formed at the end of the neck portion 6 remote from the female portion 4. The flange 8 extends radially outwardly from the end of the neck portion 6. The female portion 4 is defined by a reduced diameter section with an inwardly facing stop surface 10. The stop surface 10 tapers radially inwardly in the direction of the male portion 2, such that the stop surface 10 is at an angle relative to the axis L.

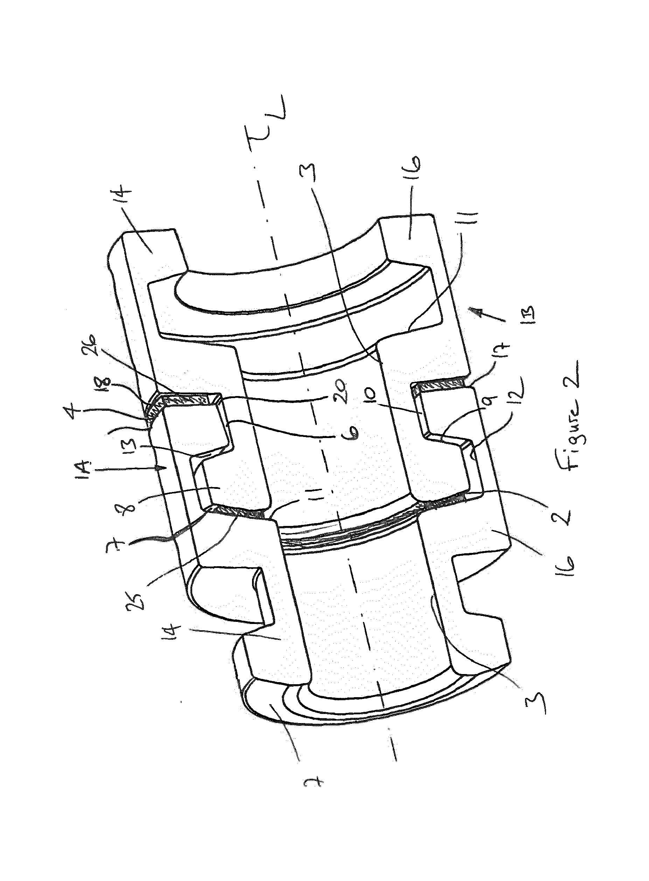

A hemi-annular recess 12 is defined in the body member 1 intermediate the second end and the neck portion 6. The recess 12 is sized so that in use it may receive the hemi-annular flange 8 of an adjoining body member and vertebra, as can be seen in Figure 2. The flange 8 includes a first abutment surface 9 which faces in the general direction of the second end of the body member 1. The recess 12 has a pair of walls 11,13 facing one another, with the second wall 13 closest to the second end of the body member 1 acting as a second abutment surface facing in the general direction of the first end of the body member 1, i.e. in a generally opposite direction to that of the first abutment surface 9. The first recess wall 11 faces towards the second end of the body member 1 and may act as a first damping surface if one or more optional damping members are utilised, as will be described in full below. The flange 8 has an end face 7 which may act as a second damping surface when a damping member is present.

The body member 1 also includes first and second mating surfaces 14,16 on the opposing longitudinal sides of the body member 1. Each mating surface 14,16 is substantially flat and continuous, as best seen in Figures 1(b) and 1(c), with no apertures or holes extending through the surfaces 14,16 for mechanical fixtures or the like. During assembly, the mating surfaces 14,16 will be lined up with corresponding surfaces on the other body member which will form the vertebra.

The female portion 4 of the body member 1 includes an end face 17 which may act as a third damping surface. The female portion 4 has an outer diameter which is larger than an outer diameter of the neck portion 6. As a result, a fourth damping surface is provided by a shoulder 18 created by the step change in diameter between the neck portion 6 and the female portion 4. The fourth damping surface faces towards the neck portion 6 of the body member, in an opposite direction to that of the third damping surface.

Figure 2 provides a perspective view of first and second body members 1A,1B which each form one half of respective first and second vertebrae of a bend restrictor. Both of the body members 1A,1B are structurally identical, and each is one half of a pair of body members which form a first and second vertebra, respectively. One complete vertebra formed from a pair of first or second body members 1A,1B provides one section of the bend restrictor. When the pairs of first and second body members 1A,1B are connected together to form a vertebra, the channel 3 of each body member 1A,1B collectively define the passage within which a utility line (not shown) will be housed.

As shown in figure 2, when the first and second body members 1A,1B are connected, the male portion 2 of the second body member 1B is received in the female portion 4 of the first body member 1A. The hemi-annular flange 8 of the second body member 1B locates within the corresponding recess 12 of the first body member 1A. When the first and second body members 1A,1B are connected, the tapering of the inwardly facing stop surface 10 of the female portion 4 ensures a radial gap 20 is present between the stop surface 10 of the first body member 1A and an outer surface of the neck portion 6 of the second body member 1B. Thanks to the tapering of the stop surface 10, when both body members 1A,1B are co-axial with the longitudinal axis L, the size of the radial gap 20 is greater adjacent the second end of the first body member 1A. This enables the connected first and second body members 1A,1B to pivot and move a limited angular distance relative to one another. Once the neck portion 6 of the second body member 1B and the stop surface 10 of the first body member 1A come into contact with one another further relative movement between the body members 1A,1B is prevented. At the same time the first abutment surface 9 on flange 8 of the second body member 1B contacts the second abutment surface 13 in the first body member 1A. The "lock-out point" is the point at which these respective abutment faces 9,13 of the first and second body members 1A,1B contact one another.

When the first and second body members 1A,1B are connected as shown in figure 2 the second damping surface 7 faces the first damping surface 11. An optional resilient damping member, in the form of an elastomeric ring member 25, may be positioned between the first damping surface 11 and the second damping surface 7. In this position the elastomeric ring member 25 is located internally of the two body members 1A,1B.

In use the elastomeric ring member 25 will dampen any relative movement between the interconnected vertebrae sections. The elastomeric ring member 25 will ensure that the bend restrictor provides a degree of damping to the relative movement between the vertebrae sections up to the "lock-out point". One or more second resilient damping members, in the form of a hemi-annular, generally C-shaped elastomeric member 26, may be positioned between the third damping surface 17 of the first body member 1A and the fourth damping surface 18 of the second body member 1B. The elastomeric member 26 is located externally of the body members 1A,1B. The bend restrictor may comprise either the first or second resilient damping members, or both.

As shown in figure 2, the body members 1A,1B are connected in series, and any number of body members can be put together to form a connected string of vertebrae to form a bend restrictor of any desired length. Each body member in the string can pivot and move a limited angular distance relative to the adjacent body member it is connected to, and hence the vertebrae formed from pairs of these body members may do likewise. When expanded over the entire bend restrictor length, the aggregate angular distance that each vertebra can move relative to those connected to it defines a locking radius of the bend restrictor. The locking radius will be equal to, or greater than, the minimum bend radius of the utility line that is housed within the bend restrictor. In this way the series of vertebrae which form the bend restrictor lock to prevent bending of the utility line below its minimum bend radius, and the bend restrictor prevents kinking, buckling or damage of the utility line housed within it.

The method of assembly of the bend restrictor will now be described. The restrictor is normally assembled on site as the utility line to be protected is being deployed from, for example, a cable deploying marine vessel. Before assembly on site, and preferably before the restrictor is transported to the site, the mating surfaces 14,16 of each body member 1A,1B are abraded in a known manner in order to increase the surface area of the surfaces 14,16. Depending on the plastics material from which the body members 1A,1B are formed, it may also be desirable after abrading to alter the mating surfaces 14,16 using a known technique such as, for example, applying a chemical primer, scorching the surface, grit blasting, or acid etching. Once on site and ready to assemble, one or both of a pair of suitably abraded and treated first and second body members 1A,1B have a suitable adhesive applied to their mating surfaces 14,16 and the adhesive is then allowed to cure. The adhesive is preferably a hydrolysis-resistant polyurethane adhesive. Examples of suitable adhesives which have been identified by the applicant are Scotch-Weld™ DP-620NS Urethane Adhesive manufactured by 3M Industrial Adhesives, and DELO-PUR® 9692 adhesive manufactured by DELO Industrial Adhesives.

Once the adhesive has been allowed to cure, the second body members 1B are placed either side of the utility line (not shown) and pressed together around the utility line so that the mating surfaces 14,16 on one body member 1B bond via the adhesive to the corresponding surfaces on the other body member 1B.

The pair of bonded second body members 1B thus form a vertebra about the utility line. If one or both of the resilient damping members 25,26 are being used they can now be installed, with the first damping member 25 placed around the utility line at the surface 7 of the flange 8 and/or the one or more second damping members 26 being placed about the utility line at the shoulder 18.

Once their adhesive has cured, the first body members 1A are then placed either side of the utility line such that the recesses 12 of the first body members 1A are adjacent the flanges 8 of the assembled second body members 1B. The first body members 1A are then pressed together about the utility line such that the flanges 8 of the second body members 1B enter the recesses 12 of the first body members 1A. At the same time, the mating surfaces 14,16 on one of the first body members 1A bond via the adhesive to the corresponding surfaces on the other first body member 1A to form another vertebra which is connected to the vertebra formed from the second body members 1B. If one or more the first and/or second damping members 25,26 is present, they are now located between their respective damping surfaces on the interconnected first and second body members 1A,1B. This assembly process is then repeated until a bend restrictor of the desired length is formed about the utility line.

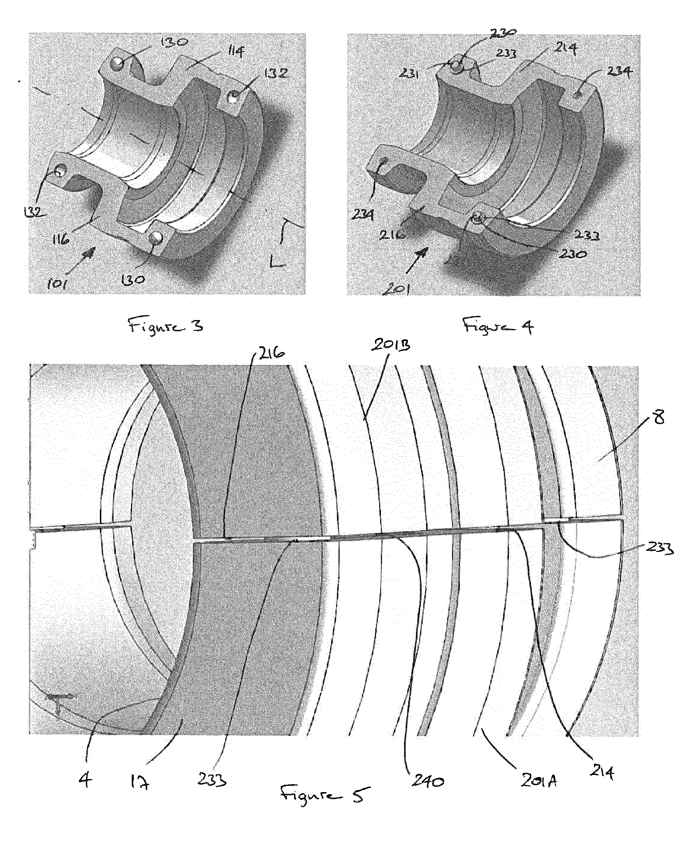

Figures 3 and 4 show first and second alternative body members in which their respective mating surfaces include a positioning means adapted to assist with the correct positioning of the body members when they are being bonded to one another to form a vertebra. The first alternative body member 101 shown in figure 3 includes a projecting positioning member 130 and corresponding recess 132 on each mating surface 114,116. A positioning member 130 and recess 132 are positioned at the same position either side of a longitudinal axis L of the body member 101 such that a further body member having the same arrangement can be placed upon the body member 101 and its positioning members will enter the corresponding recesses in the body member 101 and vice versa. In this way, the body members are perfectly aligned when being bonded together in the manner already described above.

The second alternative body member 201 shown in figure 4 also has a projecting positioning member 230 and corresponding recess 234 on each mating surface 214,216. These projecting members 230 include a distal, or free, end 231 and a proximal, or adjacent, end 233 which is attached to the associated mating surface 214,216. Where this embodiment differs is that the distal end 231 has a first width or diameter which is less than or equal to that of the positioning recess 234, and the proximal end 233 has a second width or diameter which is greater than that of the positioning recess 234. Consequently, the distal end 231 of each projecting member 230 will enter its corresponding recess 234 on an adjoining body member but the proximal end 233 cannot. As shown in the detail view of figure 5 this arrangement of the distal and proximal ends 231,233 of the projecting members 230 ensures that a small gap 240 is provided between the first and second body members 201A,201B when they are brought together, thus ensuring that adhesive is not squeezed out from between the two body members 201A,201B when they are brought together.

As a further alternative to the positioning means shown in figures 3-5 one body member in each pair may have a tongue portion projecting from one or both mating surfaces, whilst the other body member has a corresponding groove in one or both mating surfaces for receiving the tongue portion(s) of the other body member. In the alternative embodiment in which there more than two body members forming each vertebra, each body member would be identical and have a tongue portion on one mating surface and a groove in the other mating surface.

As the vertebrae are formed from body members which are bonded to one another rather than mechanically fixed together, the body members do not require large holes or apertures extending through them for accommodating bolts or similar mechanical fixtures. As a result, the strength of each vertebra is improved as there are no holes or apertures in the body members to act as stress locators. Furthermore, bonding the body members to one another provides an assembly process which is cheaper and more straightforward than an assembly process with relies on attaching the body members together with mechanical fixtures. There is also less chance of the body members being damaged due to either excessive torque being applied to the mechanical fixtures, or the body members and their apertures being misaligned with the resultant additional wear on the body members.

Although the figures show bend restrictors comprising vertebrae formed from pairs of body members it should be understood that the vertebrae may be formed from a greater number of body members if required. For example, each vertebra may be formed from three or four body members.

Although the illustrated embodiments of the present invention are of a bend restrictor, the present invention is not limited to this specific application and may also cover other protective members used to protect utility lines. For example, the protective member may be a centraliser for protecting utility lines within "J-Tubes" or "I-Tubes" in a subsea environment, where the centraliser is made up of two elongate body portions. Each body portion contains a channel, and when the body portions are bonded to one another a passage is formed in which the utility line can be located. The outer surface of each body portion includes one or more radially extending fins or projections which in use keep the centraliser and utility line central within a J-Tube, I-Tube or the like.

Although the preferred method of assembling the protective members is to bond the body members around the utility line, the present invention is not limited to this specific method. Instead, the present invention also provides a method in which the body members are bonded together and the utility line is then fed through the passage defined by the bonded body members.

These and other modifications and improvements may be incorporated without departing from the scope of the present invention.

## Claims

1. A protective member for a utility line, the member comprising at least two body portions, each body portion containing a channel, and wherein the body portions are bonded to one another such that the channels form a passage in which the utility line is located.

2. The protective member of claim 1, wherein the body portions are formed from polyurethane, and are bonded to one another by a hydrolysis-resistant polyurethane adhesive.

3. The protective member of either preceding claim, wherein each body portion includes positioning means for correctly positioning the body portions relative to one another.

4. The protective member of claim 3, wherein the positioning means comprises a tongue projecting from a mating surface of a first body portion, and a groove placed in the corresponding mating surface of a second body portion for receiving the tongue.

5. The protective member of claim 3, wherein the positioning means comprises a positioning member projecting from a mating surface of the first body portion, and a positioning recess placed in the corresponding mating surface of the second body portion for receiving the positioning member.

6. The protective member of claim 5, wherein the positioning member includes a distal end having a first width or diameter which is less than or equal to that of the positioning recess, and a proximal end having a second width or diameter which is greater than that of the positioning recess.

7. The protective member of any preceding claim, wherein the protective member is a centraliser which in use is located within an outer tubular member.

8. The protective member of any of claims 1 to 6, comprising a first end having a longitudinally projecting portion and a second end having a recess adapted to receive the projecting portion of an adjacent protective member.

9. The protective member of claim 8, wherein the first end includes a flange projecting radially outwardly therefrom, and the recess is an inwardly facing circumferential groove adapted to receive such a flange.

10. A bend restrictor adapted to house a utility line, the bend restrictor comprising at least first and second protective members in accordance with claim 8 or claim 9, the protective members being connected to one another in series so that each the first protective member can pivot through a limited range of motion relative to the second protective member.

11. The bend restrictor of claim 10, further comprising at least one resilient damping member located between the at least first and second protective members.

12. The bend restrictor of claim 11, further comprising a plurality of interconnected sets of first and second protective members, and a damping member located between each pair of adjacent protective members.

13. A method of assembling a protective member for a utility line, the method comprising the steps of:
forming at least two body portions, with each body portion containing a channel;
applying an adhesive to at least one of the body portions; and
pressing the body portions together such that the body portions bond together and a passage is defined by the channels.

14. The method of claim 13, wherein the body portions are bonded together around the utility line.
